# EUROPEAN PATENT APPLICATION

(11) **EP 2 672 641 A1**
(43) Date of publication of application: **11.12.2013**
(21) Application number: 12305643.4
(22) Date of filing: 06.06.2012
(51) Int. Cl.: H04L 1/00

(54) **Pro-active packet FEC adaptation mechanism**

(71) Applicant: Alcatel Lucent, 75007 Paris (FR)
(72) Inventor: Loehr, Juergen, 70190 Stuttgart (DE)
(74) Representative: MERH-IP Matias Erny Reichl Hoffmann

(57) **Abstract**

A method of operating a communication network (20) comprising a data source (21) and a data sink (22) which are connected with each other via a communication network path (23) comprises: determining, at the data sink (22), information reflecting a probability of a loss of a data packet of a data packet stream transmitted from the data source (21) to the data sink (22) occurring in the future; transmitting the determined information from the data sink (22) to the data source (21); and controlling, at the data source (21), a forward error correction (FEC) packet insertion process in dependence on the received information, wherein the FEC packet insertion process defines insertion locations at which FEC packets are inserted into the data packet stream for transmitting the data packet stream from the data source (21) to the data sink (22), and wherein the FEC packet insertion process is controlled such that an expected data packet loss can be compensated by the inserted FEC packets.

## Description

The document relates to a method of operating a data sink, a data source, and a communication network. In particular, the document relates to the insertion of Forward Error Correction (FEC) packets into a data packet stream.

Packet FEC (Forward Error Correction) may be used to recover from payload data packet loss in a communication network. Packet FEC periodically adds, at a data source, FEC packets to a payload data packet stream as part of transmitting a data packet stream comprising the payload data packet stream and the added FEC packets from the data source to a data sink via a communication network path of the communication network. In case that one or several payload data packets are lost during transmission, the lost payload data packet(s) can be reconstructed at the data sink based on the received payload data packets and the received FEC packets included in the data packet stream.

Packet FEC implies data overhead, as FEC packets have to be added frequently to the payload data packet stream, causing a considerable amount of added bandwidth to be used for FEC packets.

It is desirable to provide a method of operating a communication network using packet FEC in which the performance of the communication network is further increased, and in which in particular the bandwidth added by the FEC packets is reduced to a level that is sufficient to provide lossless packet transport in each particular condition of the communication network connecting source and sink (e.g. via a communication network path of the communication network).

According to an aspect, a method of operating a communication network comprising a data source and a data sink which are connected with each other via a communication network path is provided. The method typically comprises: determining, at the data sink, information reflecting a probability of a loss of a data packet of a data packet stream transmitted from the data source to the data sink occurring in the future. Alternatively to the term "probability", the term "likelihood" may be used. The information reflecting the probability of the loss of a data packet of the data packet stream may be determined prior to actually incurring any loss of a data packet of the data packet stream. In other words, the probability may be determined pro-actively, i.e. prior to actually incurring a packet loss. In yet other words, the information reflecting the probability of the loss of a data packet of the data packet stream may be determined, while the loss ratio of data packets between the data source and the data sink is at or below a pre-determined threshold, e.g. zero, or while the bit error rate of the communication network path between the data source and the data sink is at or below a pre-determined threshold, e.g. zero.

In yet other words, the method may comprise determining the information reflecting the probability of the loss of a data packet of the data packet stream transmitted from the data source to the data sink occurring in the future, within a time period where no loss of data packets of the data packet stream transmitted from the data source to the data sink occurs. The time period may have a pre-determined length, e.g. 1ms or more, 10ms or more, 100 ms or more, 1s or more, 10s or more, 100s or more. As such, the information reflecting the probability of the loss of a data packet of the data packet stream transmitted from the data source to the data sink occurring in the future is not determined based on a loss ratio or a bit error rate.

On the other hand, the information reflecting the probability of a data packet loss may be determined based on information related to one or more data packets received at the data sink (and not related to one or more data packets which were lost and therefore not received at the data sink). The information related to one or more data packets received at the data sink may be information which is comprised within, or related to properties of, the one or more data packets received at the data sink, such as a flag (e.g. a congestion encountered flag) or a time stamp (used e.g. for the determination of packet delay) or other information on the temporal behavior of the data packet stream. In particular, the information reflecting the probability of the loss of a data packet of the data packet stream transmitted from the data source to the data sink occurring in the future may be determined only based on information which is comprised within the one or more data packets received at the data sink. By way of example, the data packets received at the data sink may be packet OAM packets and the information comprised within the one or more packet OAM packets may be information reflective of a packet delay. By way of a further example, the data packets received at the data sink may be payload data packets and the information comprised within the one or more payload data packets may be information reflective of a buffer fill status of one or more buffers on the communication network path between the data source to the data sink.

The method may further comprise transmitting the determined information from the data sink to the data source; and controlling, at the data source, a forward error correction (FEC) packet insertion process in dependence on the received information. The FEC packet insertion process may control insertion of FEC packets into the data packet stream as part of transmitting the data packet stream from the data source to the data sink. In particular, the FEC packet insertion process may control a number of FEC packets (or a fraction of FEC packets comprised within the data packet stream) that are inserted into the data packet stream as part of transmitting the data packet stream. The FEC packet insertion process may be controlled such that an expected data packet loss can be compensated by the inserted FEC packets. An advantage of such an FEC insertion process which is based on the received information is that packet FEC can be enabled/increased before a data packet loss actually occurs.

It should be noted that "Information reflecting a probability of a loss of a data packet of a data packet stream transmitted from the data source to the data sink occurring in the future" typically means information which is determined exclusively based on data which is not related to data packet loss events which have actually occurred in the past. That is, the information is purely predictive or statistically predictive and does not take into account any history of actual data packet losses. In other words: The information is typically only derived from communication network status data related to periods during which no packet loss events occur. Of course, in case of a data packet loss, the information reflecting a probability of a loss of a data packet may be extended by additional information derived from data relating to periods during which data packet loss occurs, and the additional information may also be used by the data source in order to control packet FEC. However, the methods described in the present document are capable to work without this additional information which is based on data relating to periods during which data packet loss occurs.

When applying this approach, it may happen that, although data packet loss has been predicted, no data packet loss actually occurs. In this case, additional network traffic caused by inserting FEC packets into the data packet stream (due to the erroneous prediction) decreases the communication network performance, since the inserted FEC packets are not needed. However, this decrease in communication network performance is typically lower than a decrease in communication network performance that would result in case of a data packet loss, assuming that no packet FEC is used (because such data packet loss would require the re-transmission of lost data packets). Furthermore, this decrease in communication performance typically requires a lower bandwidth overhead than the one needed for constant insertion of FEC packets at a frequency which is as high as needed to cover the worst-case of correctable packet loss. As a consequence, the overall performance of the communication network can be improved over the long run when applying the methods described in the present document. The inventor realized that it is detrimental to apply packet FEC as a re-active mechanism, where packet FEC is disabled if no payload data packet loss is observed, and is again enabled only after having observed a payload data packet loss. Thus, payload data packets are already lost at the time when packet FEC has been enabled. This, however, results in a decrease of the communication network performance (loss of bandwidth) since sent payload data packets consume network resources until they are dropped, however these data packets are not delivered to the destination (data sink) and must be re-sent. Also, many higher protocol layers, e.g. a TCP layer, are negatively influenced by a payload data packet drop. For example, a TCP layer may be triggered by payload data packet loss to throttle down bandwidth, which results in a strong reduction of data throughput under packet loss conditions. The methods described in the present document avoid this drawback. In particular, the methods described in the present document allow for a pro-active packet FEC mechanism, thereby increasing the performance of the communication network.

The FEC packet insertion process may control a frequency with which FEC packets are inserted into the data packet stream. The higher the risk (or the probability) of losing a data packet, the higher the frequency with which FEC packets are inserted into the data packet stream may be chosen. "Higher frequency" may in this context mean that the number of FEC packets transmitted after a predetermined set of payload data packets is increased, or that the number of payload data packets after which one or several FEC packets are inserted is decreased, or a combination of both.

The information reflecting a probability of a loss of a data packet may be determined based on transmission durations needed (or delays incurred) by the data packets to be transmitted from the data source to the data sink. For example, a long transmission period of a data packet from the data source to the data sink may indicate that the hardware of the communication network (e.g. buffers on the communication network path between the data source and the data sink) is filling up and are approaching its capability limit, i.e. that a data packet loss is likely to occur due to buffer overflow in the future. As indicated above, the information reflecting the probability of the loss of a data packet may be determined based on information comprised within, or related to, one or more data packets received at the data sink. The information comprised within the one or more data packets may be a time stamp of the one or more data packets which is used to determine the respective transmission durations (or transmission delays) of the one or more data packets received at the data sink. The transmission duration information may be obtained from other mechanisms that allow to determine the transmission duration of a packet or a packet flow.

Alternatively or additionally, the information may be determined based on information reflecting buffer fill states of buffers which are positioned (within one or more network nodes) along the communication network path, and which are used to temporarily store data packets during transmission along the communication network path from the data source to the data sink. For example, the information may be generated based on flag information which is set within data packets when transmitting the data packets along the communication network path. The information may for example be determined based on a frequency of data packets received at the data sink which comprise a predetermined flag value. For example, it may be determined that a realistic chance of a data packet loss exists if the frequency of data packets (or a variation of the frequency of data packets) received at the data sink which comprise a predetermined flag value exceeds a predetermined threshold value.

As indicated above, the information reflecting the probability of the loss of a data packet may be determined based on information comprised within one or more data packets received at the data sink. The information comprised within the one or more data packets may be the information reflecting buffer fill states of buffers which are positioned (within one or more network nodes) along the communication network path, e.g. flag information such as a predetermined flag value.

The flag information may be information which is generally available, i.e. which is generated and used by standard communication mechanisms underlying basic network communication processes and being available anyhow. For example, in case that the data packets are formed of IP packets (i.e. one data packet comprises one or more IP packets), the flags may be Explicit Congestion Notification flags which are set within the data packets (e.g. by one or more network nodes on the network path) when transmitting the data packets along the communication network path. That is, general information used in IP packet communication may be used (as flag information) in order to predict a possible data packet loss.

The determined information may only be sent from the data sink to the data source if an event occurs which implies a probability of a loss of a data packet in the future. In this way, unnecessary data traffic from the data sink to the data source can be avoided. In this case (i.e. in the case that no information regarding the probability of the loss of a data packet is sent from the data sink to the data source), the data source may be configured such that it dynamically reduces a frequency with which FEC data packets are inserted into the data packet stream if no information reflecting a probability of a loss of a data packet is received by the data source for a predetermined period of time. In this way, unnecessary insertion of FEC packets at the data source and thus unnecessary consumption of hardware (e.g. transmission) recourses (bandwidth) can be avoided.

Alternatively or additionally, information reflecting a probability of a loss of a data packet may be sent from the data sink to the data source in regular time intervals. This may be done irrespective of whether an event which implies a probability of a loss of a data packet in the future has actually occurred or not. Although this embodiment consumes additional communication bandwidth, it has the advantage that the data source can easily determine whether there are communication problems on the communication path connecting the data source with the data sink, and react quickly: if no information reflecting a probability of a loss of a data packet is received from the data sink, it is assumed that there are communication problems on the communication path in an communication direction pointing from the data source to the data sink, and the data source may instantaneously increase a frequency with which FEC packets are inserted into the data packet stream. Further, the information reflecting a probability of a loss of a data packet received from the data sink is small, and will typically be sent with lower frequency than data packets, which implies only a little data overhead.

According to an aspect, a data sink is provided which is connectable to a data source via a communication network (e.g. via communication network path of the communication network). The data sink and/or the data source may be comprised within respective network nodes. The data sink comprises: a receiving unit configured to receive a data packet stream from the data source via the communication network (e.g. via the communication network path); a determining unit configured to determine information reflecting a probability of a loss of a data packet of the data packet stream during transmission from the data source to the data sink occurring in the future; and a sending unit configured to send the determined information to the data source. The information enables the data source to define insertion locations (or insertion time instants) at which FEC packets are inserted into the data packet stream for transmitting the data packet stream from the data source to the data sink such that an expected data packet loss can be compensated by the inserted FEC packets. Furthermore, the data sink may be configured to reconstruct payload data packets which may have been lost, based on the received one or more payload data packets and based on the received one or more FEC packets.

According to a further aspect, a data source is provided which is connectable to a data sink via a communication network (e.g. via a communication network path of the communication network). The data source comprises: a sending unit configured to send a data packet stream to the data sink via the communication network (e.g. via the communication network path); a receiving unit configured to receive information from the data sink reflecting a probability of a loss of a data packet of the data packet stream during transmission from the data source to the data sink occurring in the future; a processing unit configured to process the received information and to control insertion locations (or insertion time instants) at which FEC packets are inserted into the data packet stream as part of transmitting the data packet stream from the data source to the data sink such than an expected data packet loss can be compensated by the inserted FEC packets. Furthermore, the data source may comprise a unit (e.g. the sending unit) configured to compute FEC packets out of data packets and configured to insert then into the data packet stream and/or to send the FEC packets to the data sink via the communication network (e.g. via the communication network path).

Further, according to an aspect, a communication network is provided comprising a data sink and a data source according to embodiments of the present invention.

Also, according to an aspect, a computer program is provided adapted to carry out the method steps and/or to embody at least parts of the data source, the data sink, or the communication network according to embodiments of the present invention when being run on a computing device like a DSP, FPGA, ASIC, processor, or the like.

In the following, embodiments of the present invention will be explained by way of example while making reference to the accompanying drawings, wherein:
Fig. 1 shows a basic working principle of Packet FEC;
Fig. 2 shows a communication network according to an embodiment of the present invention;
Fig. 3 shows a method of operating a communication network according to an embodiment of the present invention;
Fig. 4 shows a data sink according to an embodiment of the present invention; and
Fig. 5 shows a data source according to an embodiment of the present invention.

While a plurality of embodiments are described below, it is clear to a person skilled in the art that individual features from more than one embodiment may be combined and that the disclosure of the present document extends to every possible combination of features described in conjunction with the embodiments. In particular, features disclosed in combination with an example method may also be combined with embodiments relating to an example system and vice versa.

In L2/L3 switched/routed communication networks, payload data packet loss typically results from overflow of buffers (L2/L3 switch/router buffers) provided along a communication network path which connects the data source and the data sink with each other: after L2/L3 switch/router buffers have filled up due to congestion, payload data packets are dropped.

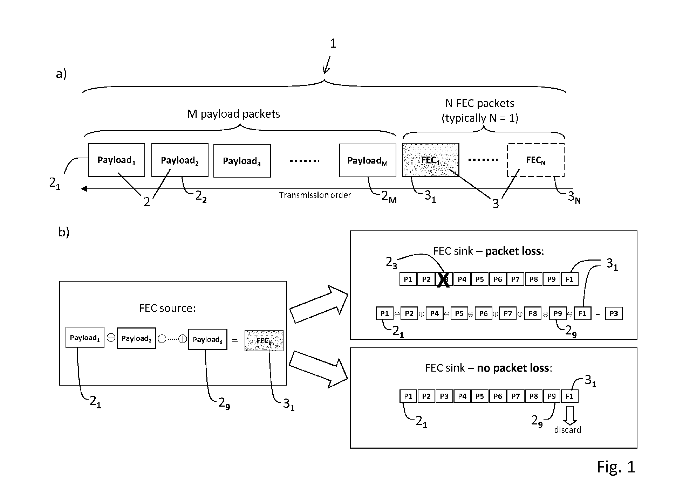

Fig. 1 shows a basic mechanism of packet FEC. Fig. 1a shows a data packet stream 1 to be transmitted from a data source to a data sink, wherein the data packet stream 1 includes one or more payload data packets and one or more FEC packets. Here, the data packet stream 1 comprises M payload data packets 2 and N FEC packets 3. In Fig. 1a, the transmission order of the payload data packets 2 and the FEC packets 3 is indicated: First, payload data packet 2₁ is transmitted, then payload data packet 2₂, etc., until finally payload data packet 2_{M} has been transmitted. After this, FEC packet 3₁ is transmitted, then FEC packet 3₂, until finally FEC packet 3_{N} has been transmitted. In the following, it is assumed that for example M is 9, and that N is 1. Of course, also other values could be chosen for M and N. The left part of Fig. 1b shows how a FEC packet may be created: a plurality of payload data packets 2 (here: M = 9 payload data packets) are logically connected with each other (for example by a logical XOR connection), thereby obtaining FEC packet 3₁. After having thus created FEC packet 3₁ in the data source (thus also referred to as "packet FEC source"), payload data packets 2₁ to 2₉, followed by FEC packet 3₁, are transmitted in this order (or in a different order) from the data source to the data sink. Alternatively, payload data packets 2₁ to 2₉ may be transmitted already before, after being considered in the creation of the FEC packet 3₁. At the data sink, as shown in the right part of Fig. 1b, two cases can be distinguished: Should one of the payload data packets 2₁ to 2₉ be lost during transmission from the data source to the data sink, the FEC packet 3₁ is used in order to restore the lost payload data packet. In the upper part of Fig. 1b, it is assumed that the third payload data packet 2₃ (P3) is lost during transmission. In this case, the lost payload data packet 2₃ can be restored by logically connecting the correctly transmitted payload data packets 2₁, 2₂, and 2₄ to 2₉ with the FEC data packet 3₁ (for example by a logical XOR connection). In case that no payload data packet 2 is lost during transmission from the data source to the data sink, the FEC data packet 3₁ is discarded at the data sink (thus also referred to as "packet FEC sink"), as shown in the lower part of Fig. 1b.

The values for M and N may be dimensioned according to parameters of the packet stream 1, the properties of the communication network path 23, particularly its packet loss properties (probability and loss pattern), or any combination thereof.

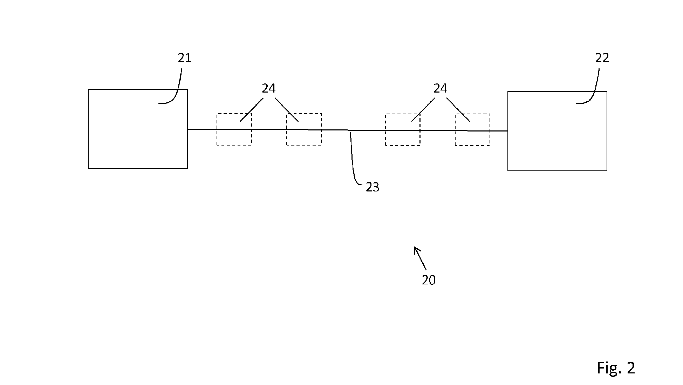

Fig. 2 shows a communication network 20 comprising a data source 21 and a data sink 22 which are connected with each other via a communication network path 23. Several buffers 24 may be arranged along the communication network path 23. The data source 21 and the data sink 22 may e.g. be network nodes which are configured to transmit and/or to send data packets over the communication network path 23. Typical examples for network nodes are IP routers (or L3 routers) or Ethernet switches (or L2 switches). The network nodes may be implemented using ASIC and/or FPGA and/or DSP and/or software on a processor. The buffers 24 are typically comprised within respective network nodes (e.g. IP routers or Ethernet switches) which are configured to forward data packets from the data source 21 to the data sink 22.

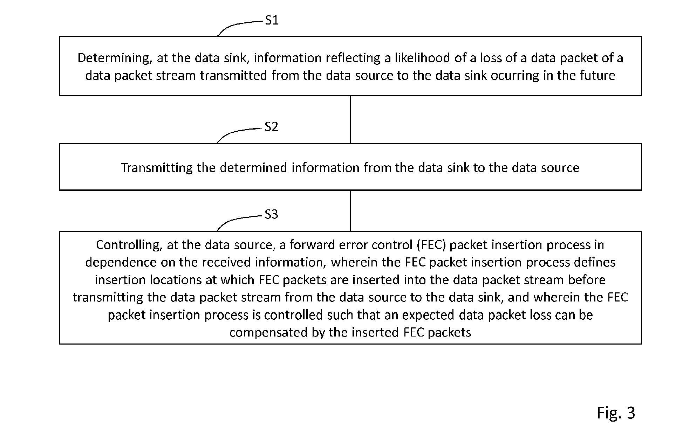

As shown in Fig. 3, the following method may be carried out in order to operate the communication network 20: At S1, information reflecting a probability of a loss of a data packet of a data packet stream transmitted from the data source 21 to the data sink 22 along the communication network path 23 occurring in the future is determined at the data sink 22. At S2, the determined information is transmitted from the data sink 22 to the data source 21 via the communication network path 23 or via a different communication network path (not shown). At S3, a forward error correction (FEC) packet insertion process is controlled at the data source 21 in dependence on the transmitted information. The FEC packet insertion process defines insertion locations (i.e. position and frequency) at which FEC packets are inserted into the data packet stream as part of transmitting the data packet stream from the data source 21 to the data sink 22. The FEC packet insertion process is controlled such that an expected data packet loss can be compensated by the inserted FEC packets.

The FEC packets can be computed from the payload data packets and inserted into the stream of payload data packets according to the mechanism as shown in Fig. 1, for example. Other computation mechanisms are also possible. In Fig. 1, the insertion locations of FEC packets into the payload data packet stream are located between groups of nine payload data packets. Of course, these insertion locations and the numbers of payload data packets/FEC packets are only an example.

The FEC packet insertion process may control a frequency with which FEC packets are inserted into the data packet stream. The higher the risk of losing a data packet, the higher the frequency with which FEC packets are inserted into the data packet stream may be chosen.

In an embodiment, the information may be determined based on transmission durations needed by the data packets to be transmitted from the data source 21 to the data sink 22. For example, a long transmission period of a data packet from the data source 21 to the data sink 22 may indicate that the hardware of the communication network 20 (e.g. the packet buffers 24) has reached its capability limit, i.e. that a data packet loss is likely to occur in the future.

In an embodiment, the information may be determined based on information reflecting buffer fill states of buffers 24 which are positioned in network units arranged along the communication network path 23, and which are used to temporarily store data packets during transmission (i.e. in the case of congestion) along the communication network path 23 the data source 21 to the data sink 22. For example, the information may be generated based on flag information included into data packets when transmitting the data packets along the communication network path 23 (e.g. in communication network path switching units connecting different parts of the communication network path 23 together). The information may for example be determined based on a frequency of data packets received at the data sink 22 which comprise a predetermined flag value. Also, the information may be determined based on a variation of the frequency of data packets received at the data sink 22 which comprise a predetermined flag value. Using a variation of the frequency of data packets has the advantage that only relative changes, but no absolute values are taken into account which makes it easier to use the same mechanism on different communication networks having different communication behavior (different absolute values).

The flag information may be information which is generally available, i.e. which is generated and used by standard communication mechanisms underlying basic network communication processes and which are available anyhow. For example, in case that the data packets are formed of IP packets (i.e. one data packet comprises one or more IP packets), the flags may be Explicit Congestion Notification flags which are set within the data packets when transmitting the data packets along the communication network path 23. That is, general information used in IP packet communication may be used (as flag information) in order to predict a possible data packet loss. Of course, also other types of standard communication mechanisms may be used. In other words, data normally used for a different purpose may be used for a second purpose, namely to derive information which implies a probability of a loss of a data packet in the future.

Generally, different kinds of communication network status data obtained from different standard communication mechanisms may be simultaneously determined, combined and used in order to derive the information reflecting a probability of a loss of a data packet in the future.

The determined information may be sent from the data sink 22 to the data source 21 in different ways: for example, the determined information may only be sent from the data sink 22 to the data source 21 after the data sink 22 has registered an event which implies a probability of a loss of a data packet in the future. In this way, unnecessary data traffic from the data sink 22 to the data source 21 can be avoided. The data source 21 may be configured such that it reduces a frequency with which FEC data packets are inserted into the data packet stream if no information reflecting a probability of a loss of a data packet is received by the data source 21 for a predetermined period of time. In this way, unnecessary insertion of FEC packets at the data source 21 and thus unnecessary consumption of hardware recourses (bandwidth) can be avoided.

Information reflecting a probability of a loss of a data packet may also be sent from the data sink 22 to the data source 21 in regular time intervals. This may be done irrespective of whether an event which implies a probability of a loss of a data packet in the future has actually occurred or not. Although this embodiment consumes additional communication bandwidth, it has the advantage that the data source 21 can easily determine whether there are communication problems on the communication path 23 connecting the data source 21 with the data sink 22, and react quickly: in case that no information reflecting a probability of a loss of a data packet is received from the data sink 22, it may be the case that there are communication problems on the communication path 23 in a direction pointing from the data source 21 to the data sink 22. Thus, the data source may immediately start to insert FEC packets into the data stream or to increase a frequency with which FEC packets are inserted into the data packet stream, in order to cover this possibility.

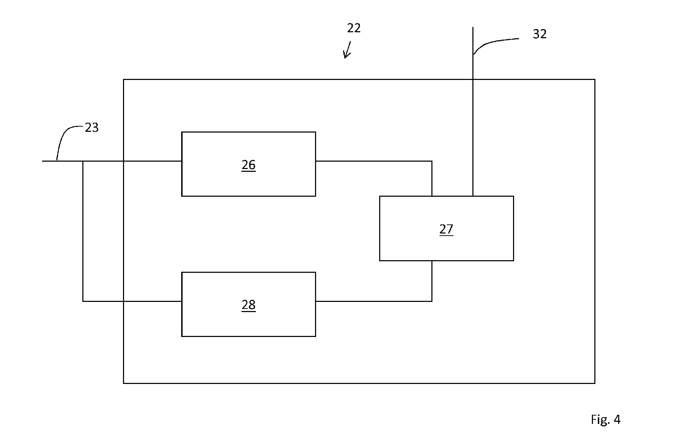

Fig. 4 shows a possible embodiment of the data sink 22 shown in Fig. 2. The data sink 22 comprises a receiving unit 26 configured to receive a data packet stream from the data source 21 via the communication network 20, i.e. via the communication network path 23. The data sink 22 further comprises a determining unit 27 connected to the receiving unit 26 and configured to determine information reflecting a probability of a loss of a data packet of the data packet stream during transmission from the data source 21 to the data sink 22 occurring in the future. The information may be determined based on communication network status data transmitted via the communication network path 23 to the receiving unit 26 which forwards the communication network status data to the determining unit 27. The communication network status data or additional communication network status data based on which the information is determined may also be transmitted to the determining unit 27 via a different communication line 32 connected to communication network status data sources located within the communication network 20, e.g. a communication network managing server. The data sink 22 also comprises a sending unit 28 connected to the determining unit 27 and configured to send the determined information to the data source 21 via the communication network path 23 (or a different communication path). The information enables to define insertion locations at which FEC packets are inserted into the data packet stream as part of (e.g. before, after or while) transmitting the data packet stream from the data source to the data sink such that an expected data packet loss can be compensated by the inserted FEC packets. The information sent from the data sink 22 to the data source 21 may be information which is processed communication network status data. In this case, the data source 21 may use the information received from the data sink 22 directly to control the FEC packet insertion process without any further processing. For example, the information may already include a set FEC packet insertion rate. However, the information sent from the data sink 22 to the data source 21 may also be "pure" communication network status data which has to be processed in the data source 21 first (by the processing unit 31) in order to obtain "final" information based on which the FEC packet insertion process can be controlled.

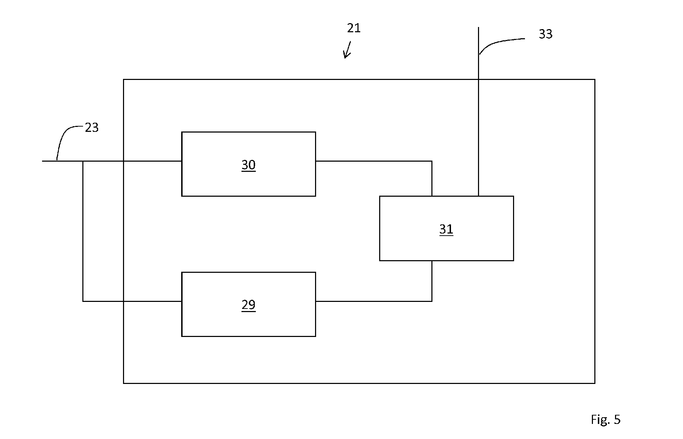

Fig. 5 shows an embodiment of the data source 21 as shown in Fig. 2. The data source 21 comprises a sending unit 29 configured to send a data packet stream to the data sink 22 via the communication network path 23, including the computation of the FEC packets and their insertion into the data packet stream towards the data sink 22. The data source 21 further comprises a receiving unit 30 configured to receive information from the data sink 22 reflecting a probability of a loss of a data packet of the data packet stream during transmission from the data source to the data sink occurring in the future. Further, the data source 21 comprises a processing unit 31 connected to the sending unit 29 and the receiving unit 30 and configured to process the received information. The information (or a part of the information) may also be transmitted to the processing unit 31 via a different communication line 33 connected to the communication network 20 and thus to the data sink 22. The communication line 33 may also be used to provide the data source 21 with additional communication network status information (other than the information received from the data sink 22). The processing unit 31 controls insertion locations at which FEC packets are inserted into the data packet stream as part of (e.g. before, after or while) transmitting the data packet stream from the data source to the data sink such that an expected data packet loss can be compensated by the inserted FEC packets. The information received from the data sink 22 may be information which is processed communication network status data. In this case, the processing unit 31 may use the information received directly to control the FEC packet insertion process without any further processing. For example, the information may already include a set FEC packet insertion frequency to be used in the future. However, the information sent from the data sink 22 may also be "pure" communication network status data which has to be processed by the processing unit 31 first in order to obtain information based on which the FEC packet insertion process can be controlled.

Using the method of operating a communication network as illustrated by Figs. 2 to 4, it can be determined whether a packet loss is likely to occur soon, which makes it possible to properly adapt to the needed level of added FEC packets even before the first packet loss occurs. In this way, packet loss can be avoided under many circumstances, e.g. by starting the packet FEC adaptation early enough to allow it to complete (i.e. insert FEC packets) before the communication network (e.g. L2/L3 switched communication network), in particular the communication network path 23, is in a condition that causes it to drop packets.

As has become apparent, predictive packet FEC adaptation as described above uses available measurement data regarding the status of the underlying communication network 20 (e.g. a L2/L3 communication network) to trigger and parameterize the adaptation. The measurement data may for example be buffer status fill information obtained from the (L2/L3) devices (e.g. the packet buffers 24) of the underlying (L2/L3) communication network path 23 connecting the data source 21 (packet FEC source) and the data sink 22 (packet FEC sink), or may be packet delay values of the data packets transported between the data source 21 and the data sink 22. The embodiments of the present invention are not restricted to these types of measurement data.

In case that the measurement data is buffer status fill information, and the underlying communication network 20 supports IP (Internet Protocol), buffer status fill information already used in IP communication mechanisms which control the flow of IP packets may be used. For example, it is known to use Explicit Congestion Notification (ECN) as defined in IETF RFC 3168 (which is herewith incorporated by reference) to mark IP packets with a congestion encountered (CE) flag instead of dropping the packet. This flag is normally used by higher layer protocols (e.g. TCP) to control the bandwidth. This flag (ECN flag) may be used in embodiments of the present invention: In case that a predetermined number or rate of IP packets with ECN CE flag arrive at the data sink 22, the data sink 22 may inform the data source 21 that the amount of FEC packets needs to be increased. So ECN may be used as a means to derive information that the underlying communication network 20 is running out of buffer capacity, and a packet loss may occur in the next future.

In case that the measurement data is data packet delay information, packet delays may be measured using a variety of mechanisms, depending on the implementation (type) of the communication network 20. Examples are ITU-T Y.1731 (which is herewith incorporated by reference) for Ethernet, ITU-T G.8113.1 (which is herewith incorporated by reference) for MPLS-TP, IETF RFC 6375 (which is herewith incorporated by reference) for MPLS-TP. All those mechanisms provide delay measurement mechanisms that also measure the delay introduced by buffers 24 in the underlying communication network 20. For example, an increased packet delay may allow the data sink 22 to trigger the packet FEC adaptation control loop, thereby informing the data source 21 as described above. The increased packet delay may for example be determined based on absolute delay numbers and/or on variations of delay numbers. Different threshold values can be used for absolute delay numbers and variations of delay numbers.

The above mentioned mechanisms for determining packet delay may be referred to as packet OAM (Operation Administration and Maintenance). In the context of the packet OAM mechanism, the data source 21 may insert packet OAM packets into the data packet stream 1. As such, the data packet stream 1 may comprise payload data packets 2 and packet OAM packets and possibly FEC packets 3. The packet OAM packets may be analyzed by the data sink 22, in order to determine data packet delay information. In particular, the data sink 22 may be configured to use information comprised within the packet OAM packets received at the data sink 22, in order to determined data packet delay information which may be the basis for determining information reflecting a probability of the loss of a data packet of the data packet stream 1 transmitted from the data source 21 to the data sink 22 occurring in the future.

In case that the data sink 22 informs the data source 21 that a data packet loss may occur soon, as for example the buffers 24 of the underlying (L2/L3) network 20 fill up, the data source 21 may determine by its own a starting value by which the frequency of FEC packet insertion is increased. In case that no data packet loss actually occurs although it has been predicted, the frequency of FEC packet insertion may be (e.g. gradually) reduced again by the data source 21.

Examples of parameters which may be used by the data source 21 and data sink 22 in order to control packet FEC adaption are:
- A threshold value of a frequency of ECN CE events that triggers the data sink 22 to notify the data source 21;
- A threshold of a data packet delay variation that triggers the data sink 22 to notify the data source 21;
- An amount of increase of FEC packet insertion frequency for the data source 21 when triggered by the data sink 22 (this amount may be included in the information sent from the data sink 22 to the data source 21, or may be set independently thereof by the data source 21);
- A timer value in the data source 21 that triggers the reduction of FEC packet insertion frequency if no indications from the data sink 22 arrive (this value may be included in the information sent from the data sink 22 to the data source 21, or may be set independently thereof by the data source 21); and
- An amount of decrease of FEC packet insertion frequency for the data source 21 if said timer expires (this amount may be included in the information sent from the data sink 22 to the data source 21, or may be set independently thereof by the data source 21).

The above listed parameters may be simultaneously used in any combination in order to control the FEC packet insertion mechanism.

In case packet loss happens despite the above described packet FEC adaption mechanism (e.g. due to sudden unexpected and/or unobservable events in the communication network 20), existing re-active control mechanisms may be activated which provide the lost data packet. Thus, the above described packet FEC adaption mechanism and already existing re-active control mechanisms may co-exist in parallel and act as complementary mechanisms to control packet FEC. This allows to add packet FEC adaptation as a value-added feature to re-active implementations, maintaining interworking.

The mechanism to communicate measurement data (ECN/CE occurrences, packet delay values) from the data sink 22 to the data source 21 should be a reliable communication mechanism, i.e. ensure a safe delivery of measurement data.

The communication mechanism may for example communicate the measurement data regularly to the data source 21, even if there is no change of the measurement data (e.g. constantly no CE flags have been found; or a measured data packet delay value remains constant). This allows the data source 21 to recognize that it receives the information constantly and does not use outdated measurement values.

In case that the communication mechanism provides an indication to the data source 21 that the communication network path 23 from the data sink 22 to the data source 21 or vice versa is broken, the data source 21 may initiate FEC insertion at a predetermined insertion level/keep a rate of FEC insertion constant at a predetermined level until a new indication arrives from the data sink 22 indicating that the communication network path 23 works again.

The communication mechanism may for example include a control TCP session between data sink 22 and data source 21 (with TCP ensuring reliable communication of measurement data and indication of connection loss). This approach would for example be appropriate in IP/L3 communication networks. Also, Ethernet OAM (Operation; Administration; Maintenance) frames may be used that are sent from the data sink 22 to the data source 21. This approach would for example be appropriate in Ethernet/L2 networks. Generally, any other mechanism that provides safe unidirectional communication from the data sink 22 to the data source 21 may be used.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method of operating a communication network (20) comprising a data source (21) and a data sink (22) which are connected with each other via a communication network path (23), the method comprising:
- within a time period of no loss of data packets of a data packet stream transmitted from the data source (21) to the data sink (22), determining, at the data sink (22), information reflecting a probability of a loss of a data packet of the data packet stream transmitted from the data source (21) to the data sink (22) occurring in the future,
- transmitting the determined information from the data sink (22) to the data source (21),
- controlling, at the data source (21), a forward error correction (FEC) packet insertion process in dependence on the received information, wherein the FEC packet insertion process controls insertion of FEC packets into the data packet stream as part of transmitting the data packet stream from the data source (21) to the data sink (22), and wherein the FEC packet insertion process is controlled such that an expected data packet loss can be compensated by the inserted FEC packets.

2. The method according to claim 1,
wherein the FEC packet insertion process controls a frequency with which FEC packets are inserted into the data packet stream.

3. The method according to claim 1,
wherein the information reflecting the probability of the loss of a data packet is determined based on information comprised within one or more data packets received at the data sink.

4. The method according to claim 1,
wherein the information is determined based on transmission durations needed by the data packets to be transmitted from the data source (21) to the data sink (22).

5. The method according to claim 1,
wherein the information is determined based on information reflecting buffer fill states of one or more buffers (24) which are positioned along the communication network path (23), and which temporally store data packets during transmission along the communication network path (23).

6. The method according to claim 5,
wherein the information is generated based on flag information which is set within one or more data packets when transmitting the data packets along the communication network path (23).

7. The method according to claim 6,
wherein the one or more data packets comprise IP packets, and wherein the flags are Explicit Congestion Notification flags which are set within the one or more data packets when transmitting the data packets along the communication network path (23).

8. The method according to claim 6,
wherein the information is determined based on a frequency of data packets received at the data sink (22) which respectively comprise a predetermined flag value.

9. The method according to claim 1,
wherein the information is only sent from the data sink (22) to the data source (21) if the information implies a probability of a loss of a data packet in the future greater than a pre-determined probability threshold.

10. The method according to claim 9,
wherein the data source (21) reduces a frequency with which FEC packets are inserted into the data packet stream if no information is received by the data source (21) for a predetermined period of time.

11. The method according to claim 1,
wherein the information is sent from the data sink (22) to the data source (21) in regular time intervals.

12. The method according to claim 11,
wherein the data source (21) increases a frequency with which FEC packets are inserted into the data packet stream if no information is received from the data sink (22) over a predetermined period of time.

13. A data sink (22) which is connectable to a data source (21) via a communication network path (23), the data sink comprising:
- a receiving unit (26) configured to receive a data packet stream from the data source (21) via the communication network path (23),
- a determining unit (27) configured to determine information reflecting a probability of a loss of a data packet of the data packet stream during transmission from the data source (21) to the data sink (22) occurring in the future, within a time period where no loss of data packets of the data packet stream transmitted from the data source (21) to the data sink (22) occurs,
- a sending unit (28) configured to send the determined information to the data source (21), wherein the information enables to define insertion locations at which FEC packets are inserted into the data packet stream as part of transmitting the data packet stream from the data source (21) to the data sink (22) such that an expected data packet loss can be compensated by the inserted FEC packets.

14. A data source (21) which is connectable to a data sink (22) via a communication network path, the data source (21) comprising:
- a sending unit (29) configured to send a data packet stream to the data sink (22) via the communication network path,
- a receiving unit (30) configured to receive information from the data sink (22) reflecting a probability of a loss of a data packet of the data packet stream during transmission from the data source (21) to the data sink (22) occurring in the future, during a time period where no loss of data packets of the data packet stream transmitted from the data source (21) to the data sink (22) occurs,
- a processing unit (31) configured to process the received information, and to control insertion locations at which FEC packets are inserted into the data packet stream as part of transmitting the data packet stream from the data source (21) to the data sink (22) such that an expected data packet loss can be compensated by the inserted FEC packets.

15. A communication network (20) comprising a data sink (22) according to claim 13 and a data source (21) according to claim 14.

## Amended claims

### Amended claims in accordance with Rule 137(2) EPC.

**1.** A method of operating a communication network (20) comprising a data source (21) and a data sink (22) which are connected with each other via a communication network path (23), the method comprising:
- within a time period during which the loss ratio or the bit error rate of data packets of a data packet stream transmitted from the data source (21) to the data sink (22) is zero, determining, at the data sink (22), information reflecting a probability of a loss of a data packet of the data packet stream transmitted from the data source (21) to the data sink (22) occurring in the future,
- transmitting the determined information from the data sink (22) to the data source (21),
- controlling, at the data source (21), a forward error correction (FEC) packet insertion process in dependence on the received information, wherein the FEC packet insertion process controls insertion of FEC packets into the data packet stream as part of transmitting the data packet stream from the data source (21) to the data sink (22), wherein the FEC packet insertion process is controlled such that an expected data packet loss can be compensated by the inserted FEC packets,
wherein the FEC packet insertion process controls a frequency with which FEC packets are inserted into the data packet stream, and
wherein the information reflecting the probability of the loss of a data packet is determined based on information comprised within one or more data packets received at the data sink.

**2.** The method according to claim 1,
wherein the information is determined based on transmission durations needed by the data packets to be transmitted from the data source (21) to the data sink (22).

**3.** The method according to claim 1,
wherein the information is determined based on information reflecting buffer fill states of one or more buffers (24) which are positioned along the communication network path (23), and which temporally store data packets during transmission along the communication network path (23).

**4.** The method according to claim 3 ,
wherein the information is generated based on flag information which is set within one or more data packets when transmitting the data packets along the communication network path (23).

**5.** The method according to claim 4 ,
wherein the one or more data packets comprise IP packets, and wherein the flags are Explicit Congestion Notification flags which are set within the one or more data packets when transmitting the data packets along the communication network path (23).

**6.** The method according to claim 4 ,
wherein the information is determined based on a frequency of data packets received at the data sink (22) which respectively comprise a predetermined flag value.

**7.** The method according to claim 1,
wherein the information is only sent from the data sink (22) to the data source (21) if the information implies a probability of a loss of a data packet in the future greater than a pre-determined probability threshold.

**8.** The method according to claim 7 ,
wherein the data source (21) reduces a frequency with which FEC packets are inserted into the data packet stream if no information is received by the data source (21) for a predetermined period of time.

**9.** The method according to claim 1,
wherein the information is sent from the data sink (22) to the data source (21) in regular time intervals.

**10.** The method according to claim 9,
wherein the data source (21) increases a frequency with which FEC packets are inserted into the data packet stream if no information is received from the data sink (22) over a predetermined period of time.

**11.** A data sink (22) which is connectable to a data source (21) via a communication network path (23), the data sink comprising:
- a receiving unit (26) configured to receive a data packet stream from the data source (21) via the communication network path (23),
- a determining unit (27) configured to determine, based on information comprised within one or more data packets of the received data packet stream information reflecting a probability of a loss of a data packet of the data packet stream, during transmission from the data source (21) to the data sink (22) occurring in the future, within a time period during which the loss ratio or the bit error rate of data packets of the data packet stream transmitted from the data source (21) to the data sink (22) is zero,
- a sending unit (28) configured to send the determined information to the data source (21), wherein the information enables to define a frequency of insertion locations at which FEC packets are inserted into the data packet stream as part of transmitting the data packet stream from the data source (21) to the data sink (22) such that an expected data packet loss can be compensated by the inserted FEC packets.

**12.** A data source (21) which is connectable to a data sink (22) via a communication network path, the data source (21) comprising:
- a sending unit (29) configured to send a data packet stream to the data sink (22) via the communication network path,
- a receiving unit (30) configured to receive information from the data sink (22) reflecting a probability of a loss of a data packet of the data packet stream during transmission from the data source (21) to the data sink (22) occurring in the future, during a time period where the loss ratio or bit error rate of data packets of the data packet stream transmitted from the data source (21) to the data sink (22) is zero ,
- a processing unit (31) configured to process the received information, and to control a frequency of insertion locations at which FEC packets are inserted into the data packet stream as part of transmitting the data packet stream from the data source (21) to the data sink (22) such that an expected data packet loss can be compensated by the inserted FEC packets, and wherein the information received by the receiving unit is derived from information comprised in one or more data packets of the data packet stream sent to the data sink.

**13.** A communication network (20) comprising a data sink (22) according to claim 11 and a data source (21) according to claim 12.
